# EUROPÄISCHE PATENTANMELDUNG

(11) **EP 4 733 870 A1**
(43) Veröffentlichungstag der Anmeldung: **29.04.2026**
(21) Anmeldenummer: 24208072.9
(22) Anmeldetag: 22.10.2024
(51) Int. Cl.: G05B 19/418

(54) **VERFAHREN ZUM ÜBERWACHEN EINER PRODUKTIONSMASCHINE SOWIE ÜBERWACHUNGSEINRICHTUNG**

(71) Anmelder: Siemens Aktiengesellschaft, 80333 München (DE)
(72) Erfinder: Lorenzi, Juan Manuel, 80805 München (DE); Völkl, Harald, 90425 Nürnberg (DE)
(74) Vertreter: Siemens Patent Attorneys

(57) **Zusammenfassung**

Zum Überwachen einer Produktionsmaschine (PM) wird fortlaufend ein aktuelles Betriebssignal (BS) erfasst. Ferner wird für eine Vielzahl von Werkstücken (W1, W2, ...) jeweils ein Zeitfenster (T1, T2, ...) erfasst, in dem das jeweilige Werkstück bearbeitet wird, und es wird für jedes Zeitfenster ein auf das jeweilige Zeitfenster begrenzter Verlauf des Betriebssignals (B1, B2, ...) erfasst. Darüber hinaus wird ein jeweiliger Qualitätsparameter (Q1, Q2, ...) des jeweils bearbeiteten Werkstücks erfasst. Weiterhin wird bei einer Abweichung eines jeweiligen Betriebssignalverlaufs von einem Sollverlauf geprüft, ob dem jeweiligen Betriebssignalverlauf (B1, B2) in einer Überwachungsdatenbank (DB) eine Fehlerursache zugeordnet (F1, F2) ist. Falls dies nicht zutrifft, wird der jeweilige Qualitätsparameter (Q1) mit einer Aufforderung (REQ) zur Eingabe einer Fehlerursache ausgegeben, wird die jeweilige Fehlerursache (F1) eingelesen und werden der jeweilige Betriebssignalverlauf (B1), der jeweilige Qualitätsparameter (Q1) sowie die jeweils eingelesene Fehlerursache (F1) einander zugeordnet in der Überwachungsdatenbank (DB) gespeichert.

Andernfalls wird die zugeordnete Fehlerursache (F2) ausgegeben und/oder die Produktionsmaschine (PM) abhängig von der zugeordneten Fehlerursache (F2) angesteuert.

## Beschreibung

Komplexe Produktionsprozesse erfordern in der Regel eine zuverlässige Qualitätsüberwachung der hergestellten oder bearbeiteten Produkte oder Werkstücke. Idealerweise sollten dabei Ursachen von Qualitätsmängeln möglichst frühzeitig identifiziert werden, um zukünftige Qualitätsprobleme gezielt zu vermeiden.

Bei zeitgemäßen Produktionsmaschinen werden aktuelle Fertigungsdaten in der Regel fortlaufend ausgewertet, und es werden Steuerungsfunktionen bereitgestellt, um beispielsweise einen Produktionsprozess anzuhalten, wenn ein vorgegebenes Toleranzmaß überschritten wird.

In vielen Fällen fehlt jedoch die Möglichkeit, in automatisierter Weise eine Ursache für das Auftreten eines Qualitätsproblems zu identifizieren oder anzugeben. Darüber hinaus können viele Produktionsmaschinen nach Auftreten eines Problems nicht automatisch lernen, dieses oder ein ähnliches Problem in Zukunft zu vermeiden. In solchen Fällen ist vielfach vorgesehen, dass Bedienpersonen die Ursache eines Problems manuell anhand von Checklisten und anderen Methoden ermitteln und geeignete Gegenmaßnahmen treffen. Eine solche Ursachenermittlung ist jedoch in der Regel verhältnismäßig zeitaufwändig.

Es ist Aufgabe der vorliegenden Erfindung, ein Verfahren und eine Überwachungseinrichtung zum Überwachen einer Produktionsmaschine anzugeben, die einen geringeren Aufwand erfordern.

Gelöst wird diese Aufgabe durch ein Verfahren mit den Merkmalen des Patentanspruchs 1, durch eine Überwachungseinrichtung mit den Merkmalen des Patentanspruchs 13, durch ein Computerprogrammprodukt mit den Merkmalen des Patentanspruchs 14 sowie durch ein computerlesbares Speichermedium mit den Merkmalen des Patentanspruchs 15.

Zum Überwachen einer Produktionsmaschine in deren laufendem Betrieb wird fortlaufend ein aktuelles Betriebssignal der Produktionsmaschine erfasst. Ferner wird für eine Vielzahl von Werkstücken jeweils ein Zeitfenster erfasst, in dem das jeweilige Werkstück durch die Produktionsmaschine bearbeitet wird, und es wird für jedes Zeitfenster ein auf das jeweilige Zeitfenster begrenzter Verlauf des Betriebssignals erfasst. Darüber hinaus wird ein jeweiliger Qualitätsparameter des jeweils bearbeiteten Werkstücks erfasst. Weiterhin wird infolge einer Detektion einer Abweichung eines jeweiligen Betriebssignalverlaufs von einem Sollverlauf geprüft, ob dem jeweiligen Betriebssignalverlauf in einer Überwachungsdatenbank eine Fehlerursache zugeordnet ist. Falls dies nicht zutrifft, werden
- eine Information über den jeweiligen Qualitätsparameter mit einer Aufforderung zur Eingabe einer jeweiligen Fehlerursache durch eine Benutzerschnittstelle ausgegeben,
- die jeweilige Fehlerursache durch die Benutzerschnittstelle eingelesen, und
- der jeweilige Betriebssignalverlauf, der jeweilige Qualitätsparameter sowie die jeweils eingelesene Fehlerursache einander zugeordnet in der Überwachungsdatenbank gespeichert.

Andernfalls wird die zugeordnete Fehlerursache ausgegeben und/oder die Produktionsmaschine abhängig von der zugeordneten Fehlerursache angesteuert.

Zum Ausführen des erfindungsgemäßen Verfahrens sind eine erfindungsgemäße Überwachungseinrichtung, ein Computerprogrammprodukt sowie ein computerlesbares, vorzugsweise nichtflüchtiges Speichermedium vorgesehen.

Das erfindungsgemäße Verfahren sowie die erfindungsgemäße Überwachungseinrichtung können insbesondere mittels eines oder mehrerer Prozessoren ausgeführt bzw. implementiert werden. Darüber hinaus kann das erfindungsgemäße Verfahren zumindest teilweise in einem sogenannten Edge-Device und/oder in einer Cloud ausgeführt werden.

Ein Vorteil der Erfindung ist insbesondere darin zu sehen, dass eine Überwachungseinrichtung im laufenden Betrieb mit manuell geprüften Fehlerursachen angereichert werden kann und somit gewissermaßen lernen kann, Fehlerursachen automatisch zu identifizieren. Damit können in automatischer Weise viele Produktionsprobleme oder Produktionsfehler frühzeitig erkannt und ggf. vermieden oder abgemildert werden. Insbesondere können geeignete, fehlerursachenspezifische Gegenmaßnahmen veranlasst oder automatisch eingeleitet werden.

Vorteilhafte Ausführungsformen und Weiterbildungen der Erfindung sind in den abhängigen Ansprüchen angegeben.

Gemäß einer vorteilhaften Ausführungsform der Erfindung können der jeweilige Betriebssignalverlauf, der jeweilige Qualitätsparameter sowie die jeweils eingelesene Fehlerursache einander zugeordnet in einem Wissensgraphen gespeichert werden. Ein solcher Wissensgraph wird häufig auch als Knowledge-Graph bezeichnet. Insbesondere können der jeweilige Betriebssignalverlauf, der jeweilige Qualitätsparameter sowie die jeweils eingelesene Fehlerursache im Wissensgraphen semantisch spezifiziert werden. Vorzugsweise werden der jeweilige Betriebssignalverlauf, der jeweilige Qualitätsparameter sowie die jeweils eingelesene Fehlerursache jeweils als Knoten und ihre Zuordnung als Kanten im Wissensgraphen gespeichert. Zum Anlegen, Verwalten und Nutzen von Wissensgraphen steht eine Vielzahl von effizienten Standardverfahren zur Verfügung.

Nach einer weiteren vorteilhaften Ausführungsform der Erfindung kann eine Mustererkennungsroutine aus den erfassten Betriebssignalverläufen jeweils ein charakteristisches Signalmuster extrahieren. Entsprechend kann zur Detektion der Abweichung vom Sollverlauf das jeweils extrahierte Signalmuster mit einem durch die Mustererkennungsroutine aus dem Sollverlauf extrahierten Soll-Signalmuster verglichen werden. Weiterhin kann der jeweilige Betriebssignalverlauf in Form des jeweils extrahierten Signalmusters in der Überwachungsdatenbank gespeichert werden. Insbesondere kann ein für die Bearbeitung eines jeweiligen Werkstücks charakteristisches Signalmuster diesem Werkstück oder dessen Typ in der Überwachungsdatenbank zugeordnet werden. Das Signalmuster kann gewissermaßen als Fingerabdruck zur Erkennung der betreffenden Werkstückbearbeitung und/oder zur einfachen Detektion von Abweichungen vom Sollverlauf verwendet werden.

Weiterhin können die erfassten Betriebssignalverläufe durch eine Clustering-Routine einer Clusteranalyse unterzogen werden, wobei die erfassten Betriebssignalverläufe in Cluster zueinander ähnlicher Betriebssignalverläufe eingeteilt werden. Entsprechend kann zur Detektion der Abweichung vom Sollverlauf geprüft werden, ob der jeweilige Betriebssignalverlauf im selben Cluster liegt wie der Sollverlauf. Vorzugsweise können der Sollverlauf oder auch mehrere Sollverläufe in die Clusteranalyse einbezogen und so einem jeweils resultierenden Cluster zugeordnet werden. Ferner kann der jeweilige Betriebssignalverlauf in Form einer Kennung des zugehörigen Clusters in der Überwachungsdatenbank gespeichert werden. Auf diese Weise kann eine Überwachungseinrichtung gewissermaßen lernen, Betriebssignalverläufe in automatisierter Weise zu unterscheiden. Zur Durchführung einer solchen Clusteranalyse steht eine Vielzahl von effizienten Analyseverfahren, wie beispielsweise sogenannte k-means-Verfahren oder DBSCAN-Verfahren (Density-Based Spatial Clustering of Applications with Noise) zur Verfügung.

Nach einer weiteren Ausführungsform der Erfindung kann für den Fall, dass der jeweilige Qualitätsparameter ein vorgegebenes Qualitätskriterium verfehlt, geprüft werden, ob dem jeweiligen Qualitätsparameter in der Überwachungsdatenbank eine Fehlerursache zugeordnet ist. Falls dies nicht zutrifft, kann die Information über den jeweiligen Qualitätsparameter mit der Aufforderung zur Eingabe der jeweiligen Fehlerursache durch die Benutzerschnittstelle ausgegeben werden. Eine eingegebene Fehlerursache kann dann in Zuordnung zum jeweiligen Qualitätsparameter zum jeweiligen Betriebssignalverlauf in der Überwachungsdatenbank gespeichert werden. Auf diese Weise kann die Überwachungsdatenbank im laufenden Betrieb mit manuell geprüften Fehlerursachen angereichert werden und somit gewissermaßen lernen, Fehlerursachen automatisch anhand eines erfassten Betriebssignalverlaufs und/oder Qualitätsparameters zu identifizieren.

Weiterhin kann der Sollverlauf aus früheren Betriebssignalverläufen abgeleitet werden, bei denen der betreffende Qualitätsparameter ein vorgegebenes Qualitätskriterium erfüllt hat. Zur Ableitung des Sollverlaufs können ein oder mehrere der früheren Betriebssignalverläufe selektiert werden, die einen hinsichtlich des Qualitätskriteriums optimalen Qualitätsparameter aufweisen. Alternativ oder zusätzlich kann zu diesem Zweck über mehrere frühere Sollverläufe gemittelt werden. Auf diese Weise kann der Sollverlauf im laufenden Betrieb ermittelt oder angepasst werden.

Der Qualitätsparameter kann insbesondere mittels eines optischen Sensors, mittels einer Kamera und/oder mittels eines Sensors zur Messung einer geometrischen Eigenschaft, einer elektrischen Eigenschaft, einer mechanischen Eigenschaft, einer optischen Eigenschaft oder einer Materialeigenschaft oder zur Messung einer Oberflächenrauheit ermittelt werden. Darüber hinaus kann der Qualitätsparameter durch eine Qualitätskontrolle ermittelt werden.

Nach einer weiteren Ausführungsform der Erfindung kann mit der Information über den jeweiligen Qualitätsparameter auch eine Information über den jeweiligen Betriebssignalverlauf durch die Benutzerschnittstelle ausgegeben werden. Die letztgenannte Information erleichtert es einer Bedienperson oder einem Benutzer in vielen Fällen, eine korrekte Fehlerursache zu finden.

Weiterhin kann geprüft werden, ob dem jeweiligen Betriebssignalverlauf in der Überwachungsdatenbank ein Qualitätsparameter zugeordnet ist. Falls dies zutrifft, kann der zugeordnete Qualitätsparameter ausgegeben und/oder die Produktionsmaschine abhängig vom zugeordneten Qualitätsparameter angesteuert werden. Der zugeordnete Qualitätsparameter kann dabei oft als Maß für eine zu erwartende Bearbeitungsqualität aufgefasst werden. Falls der zugeordnete Qualitätsparameter eine mangelnde Bearbeitungsqualität indiziert, kann die Produktionsmaschine vorzugsweise derart angesteuert werden, dass fehlerursachenspezifische Gegenmaßnahmen veranlasst und/oder eingeleitet werden. Die zugeordnete Fehlerursache kann dazu verwendet werden, geeignete Gegenmaßnahmen zu identifizieren. Alternativ oder zusätzlich kann die Produktionsmaschine oder zumindest eine Bearbeitung des aktuellen Werkstücks angehalten werden. Darüber hinaus kann eine Bedienperson oder ein Benutzer entsprechend gewarnt werden.

Nach einer vorteilhaften Weiterbildung der Erfindung kann ein großes Sprachmodell, wie beispielsweise GPT-4, GPT-3, BLOOM, LLaMA, T5-11B, PaLM-E, Gemini Pro oder Mixtral 8x7b bereitgestellt werden, das darauf vortrainiert ist, anhand von Eingabetexten darauf bezogene Antworttexte zu generieren. Die Eingabetexte und Antworttexte können insbesondere in natürlicher Sprache formuliert sein. Derartige große Sprachmodelle werden häufig auch als LLM abgekürzt (LLM: Large Language Modell) und sind seit einiger Zeit allgemein verfügbar oder nutzbar. Insbesondere kann als großes Sprachmodell ein sogenannter generativer vortrainierter Transformer, abgekürzt GPT (Generative pre-trained Transformer) verwendet werden. Die gespeicherten Betriebssignalverläufe, Qualitätsparameter, Fehlerursachen sowie deren gegenseitige Zuordnungen können dann dem großen Sprachmodell in Textform, vorzugsweise im Rahmen eines Finetunings, Prompt-Engineerings oder einer anderen Form des Nachtrainings zugeführt werden. Weiterhin kann durch die Benutzerschnittstelle eine Benutzeranfrage eingelesen und in Form eines Eingabetextes in das große Sprachmodell eingespeist werden, das daraus einen Antworttext generiert. Der Antworttext kann dann durch die Benutzerschnittstelle ausgegeben werden. Auf diese Weise kann eine Bedienperson über die Benutzerschnittstelle in natürlicher Sprache kommunizieren. Darüber hinaus können dem Antworttext in vielen Fällen zusätzliche nützliche Angaben entnommen werden, insofern große Sprachmodelle erfahrungsgemäß gute Inferenz- und Abstraktionsfähigkeiten aufweisen.

Nach einer weiteren Ausführungsform der Erfindung können für den Fall, dass dem jeweiligen Betriebssignalverlauf in der Überwachungsdatenbank mehrere Fehlerursachen zugeordnet sind, diese Fehlerursachen durch die Benutzerschnittstelle zur Auswahl einer zutreffenden Fehlerursache ausgegeben werden. Durch eine solche Auswahlmöglichkeit wird die Eingabe einer Fehlerursache oft erleichtert.

Ferner können Betriebssignalverläufe und/oder Qualitätsparameter mehrerer Produktionsmaschinen erfasst und produktionsmaschinenübergreifend in der Überwachungsdatenbank, vorzugsweise in einem Wissensgraphen gespeichert werden. Demgemäß kann einem bei einer ersten Produktionsmaschine erfassten Betriebssignalverlauf und/oder Qualitätsparameter eine Fehlerursache bei einer von der ersten Produktionsmaschine verschiedenen, zweiten Produktionsmaschine in der Überwachungsdatenbank, vorzugsweise im Wissensgraphen zugeordnet werden. Auf diese Weise können Auswirkungen von durch frühere Bearbeitungsschritte bedingten Fehlerursachen über mehrere Produktionsmaschinen hinweg zugeordnet, korreliert, protokolliert, ausgewertet und/oder modelliert werden.

Analog dazu kann einem bei der zweiten Produktionsmaschine erfassten Betriebssignalverlauf und/oder Qualitätsparameter ein bei der ersten Produktionsmaschine erfasster Qualitätsparameter zugeordnet werden. Hierdurch können Auswirkungen einer Qualität eines früheren Bearbeitungsschritts auf eine Qualität eines späteren Bearbeitungsschritts über mehrere Produktionsmaschinen hinweg zugeordnet, korreliert, protokolliert, ausgewertet und/oder modelliert werden.

Ein Ausführungsbeispiel der Erfindung wird nachfolgend anhand der Zeichnung näher erläutert. Dabei veranschaulichen jeweils in schematischer Darstellung
Figur 1 eine Überwachung einer Produktionsmaschine durch eine erfindungsgemäße Überwachungseinrichtung und
Figur 2 Verläufe eines Betriebssignals über mehrere werkstückspezifische Zeitfenster.

Insofern in den Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

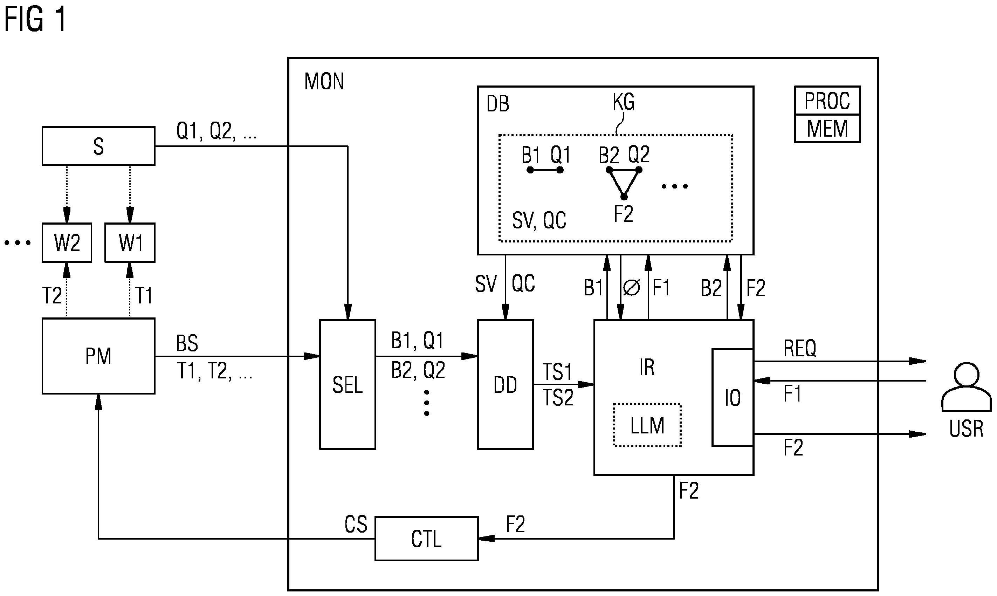

Figur 1 veranschaulicht eine Überwachung einer Produktionsmaschine PM durch eine erfindungsgemäße Überwachungseinrichtung MON. Die Produktionsmaschine PM kann insbesondere eine Werkzeugmaschine, ein Roboter, eine Förderbandanlage oder eine Fertigungsanlage sein oder eine solche Maschine umfassen.

Die Überwachungseinrichtung MON verfügt über einen oder mehrere Prozessoren PROC zum Ausführen der Verfahrensschritte der Erfindung sowie über einen oder mehrere Speicher MEM zum Speichern von zu verarbeitenden Daten.

Die Überwachungseinrichtung MON ist in Figur 1 extern zur Produktionsmaschine PM dargestellt und ist mit dieser gekoppelt. Alternativ dazu kann die Überwachungseinrichtung MON auch ganz oder teilweise in die Produktionsmaschine PM oder in eine Steuereinrichtung zum Steuern der Produktionsmaschine integriert sein. Vorzugsweise ist die Überwachungseinrichtung MON ganz oder teilweise in einem sogenannten Edge-Device implementiert.

Durch die Produktionsmaschine PM werden fortlaufend Werkstücke W1, W2, ... bearbeitet. Die Vielzahl von Werkstücken W1, W2, ... kann Produkte, Teilprodukte, Zwischenprodukte oder andere zu bearbeitende Werkstücke umfassen.

Die Bearbeitung eines jeweiligen Werkstücks W1 bzw. W2, ... erfolgt innerhalb eines jeweiligen Zeitfensters T1 bzw. T2, ..., wobei die Zeitfenster T1, T2, ... auch überlappen können. Die Produktionsmaschine PM erfasst für jedes Werkstück W1 bzw. W2, ... das korrespondierende Zeitfenster T1 bzw. T2, ..., wobei ein Anfang des jeweiligen Zeitfensters auf einen Begin der Bearbeitung des jeweiligen Werkstücks W1 bzw. W2, ... und ein Ende des Zeitfensters auf ein Ende dieser Bearbeitung gesetzt wird. Entsprechend können die Zeitfenster T1, T2, ... jeweils durch ein Zahlenpaar dargestellt werden.

Weiterhin werden durch die Überwachungsmaschine MON fortlaufend ein oder mehrere aktuelle Betriebssignale BS der Produktionsmaschine PM erfasst. Die Betriebssignale BS können im laufenden Betrieb der Produktionsmaschine PM ausgeleitet und/oder sensorisch erfasst oder gemessen werden. Die Betriebssignale BS werden jeweils im Zeitverlauf als Zeitreihe erfasst.

Die Betriebssignale BS können insbesondere aktuelle Steuersignale, Stellwerte, Steuerparameter, Regelsignale, Messwerte, Sensorsignale, Umgebungssignale, Überwachungssignale, Diagnosesignale und/oder Fehlersignale der Produktionsmaschine PM umfassen. Durch die Betriebssignale BS können beispielsweise eine Leistung, eine Drehzahl, ein Drehmoment, eine Bewegungsgeschwindigkeit, eine ausgeübte oder einwirkende Kraft, eine Temperatur, ein Druck, vorhandene Ressourcen, ein Ressourcenverbrauch, ein Schadstoffausstoß, ein Verschleiß, eine Belastung oder eine Vibration der Produktionsmaschine PM und/oder eine Position, Orientierung oder ein Bearbeitungszustand von Werkstücken quantifiziert werden.

Die Betriebssignale BS werden zusammen mit den erfassten Zeitfenstern T1, T2, ... fortlaufend von der Produktionsmaschine PM zur Überwachungseinrichtung MON übermittelt und dort in eine Selektionseinrichtung SEL der Überwachungseinrichtung MON eingespeist. Die Selektionseinrichtung dient unter Anderem dem Zweck, aus einem jeweiligen Betriebssignal BS zeitfensterspezifische Abschnitte zu selektieren. Aus Gründen der Übersichtlichkeit wird im Folgenden nur die Verarbeitung eines einzelnen Betriebssignals BS explizit dargestellt.

Weiterhin wird mittels einer Sensorik S fortlaufend eine jeweilige Bearbeitungsqualität des jeweiligen Werkstücks W1 bzw. W2, ... nach dessen Bearbeitung gemessen oder anderweitig erfasst. Zu diesem Zweck kann die Sensorik S beispielsweise eine Kamera, einen optischen Sensor und/oder einen Sensor zur Messung von geometrischen Eigenschaften, elektrischen Eigenschaften, mechanischen Eigenschaften, optischen Eigenschaften, Materialeigenschaften oder zur Messung einer Oberflächenrauheit des betreffenden Werkstücks W1 bzw. W2, ... umfassen. Die Sensorik S kann zumindest teilweise in die Produktionsmaschine PM oder in die Überwachungseinrichtung MON integriert sein oder extern dazu implementiert sein.

Die Bearbeitungsqualität eines jeweiligen Werkstücks W1 bzw. W2, ... wird durch einen jeweiligen werkstückspezifischen Qualitätsparameter Q1 bzw. Q2, ... quantifiziert. Hierdurch kann insbesondere eine Abweichung von einer vorgegebenen Geometrie, Festigkeit, Stabilität, Transparenz, Leitfähigkeit und/oder Oberflächenrauheit des betreffenden Werkstücks W1 bzw. W2, ... quantifiziert werden. Darüber hinaus kann ein jeweiliger Qualitätsparameter Q1 bzw. Q2, ... eine Information darüber umfassen, ob ein vorgegebenes Qualitätskriterium erfüllt wird oder nicht.

Die erfassten Qualitätsparameter Q1, Q2, ... werden von der Sensorik S zur Überwachungseinrichtung MON übermittelt und dort in die Selektionseinrichtung SEL eingespeist.

Durch die Selektionseinrichtung SEL wird ein jeweiliger Qualitätsparameter Q1 bzw. Q2, ... dem jeweils korrespondierenden Zeitfenster T1 bzw. T2, ... sowie einem auf das jeweilige Zeitfenster T1 bzw. T2, ... begrenzten Verlauf B1 bzw. B2, ... des Betriebssignals BS zugeordnet. D.h. der ein N-tes Werkstück WN, N=1,2,..., betreffende Qualitätsparameter QN wird dem Zeitfenster TN, in dem dieses Werkstück WN bearbeitet wurde, sowie dem Betriebssignalverlauf BN während dieser Bearbeitung zugeordnet.

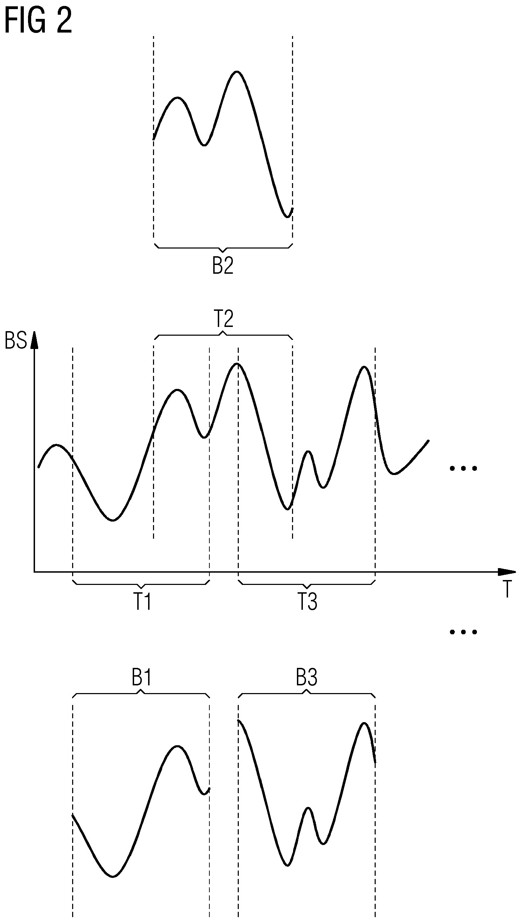

Figur 2 veranschaulicht verschiedene Verläufe B1, B2, B3, ... des Betriebssignals BS über verschiedene werkstückspezifische Zeitfenster T1, T2, T3, .... Im dargestellten Diagramm ist das Betriebssignal BS auf der Ordinate gegen die Zeit T auf der Abszisse aufgetragen. Weiterhin sind die Grenzen der Zeitfenster T1, T2 und T3, d.h. jeweils Bearbeitungsbeginn und Bearbeitungsende eines korrespondierenden Werkstücks, durch punktierte senkrechte Linien angedeutet.

Durch ein jeweiliges Zeitfenster T1 bzw. T2, T3, ... wird ein jeweiliger zeitlicher Abschnitt des Betriebssignals BS abgegrenzt. Der Verlauf des Betriebssignals BS über einen jeweiligen Abschnitt wird als werkstückspezifischer Betriebssignalverlauf B1 bzw. B2, B3, ... erfasst. D.h. der Abschnitt des Betriebssignals BS über das Zeitfenster T1 bildet den Betriebssignalverlauf B1, der Abschnitt über das Zeitfenster T2 den Betriebssignalverlauf B2 usw.

Wie Figur 1 weiter veranschaulicht, werden die verschiedenen Betriebssignalverläufe B1, B2, ... durch die Selektionseinrichtung SEL gemäß den übermittelten Zeitfenstern T1, T2, ... aus dem Betriebssignal BS spezifisch selektiert und jeweils in Zuordnung zu dem korrespondierenden Qualitätsparameter Q1 bzw. Q2, ... von der Selektionseinrichtung SEL zu einem Abweichungsdetektor DD der Überwachungseinrichtung MON übermittelt.

Die Betriebssignalverläufe B1, B2, ... können jeweils auf verschiedene Weise dargestellt, gespeichert, verglichen und verarbeitet werden.

Auf besonders einfache Weise können die Betriebssignalverläufe B1, B2, ... jeweils als Zeitreihe, d.h. als Vektor von im Zeitfenster T1 bzw. T2, ... zeitlich aufeinanderfolgenden Werten des Betriebssignals BS dargestellt, gespeichert, verglichen und verarbeitet werden. Zum Vergleich zweier solcher Zeitreihen kann beispielsweise ein Euklidischer Abstand zwischen den darstellenden Vektoren dieser Zeitreihen ermittelt werden. Der Euklidische Abstand quantifiziert dabei eine Abweichung zwischen den betreffenden Zeitreihen. Bei Vektoren unterschiedlicher Dimension kann der Vektor mit niedrigerer Dimension um Default-Werte erweitert werden, oder es kann eine Abtastratenkonvertierung durchgeführt werden, um die Dimensionen der Vektoren anzugleichen.

Alternativ oder zusätzlich kann aus einem jeweiligen Betriebssignalverlauf B1 bzw. B2, ... durch eine Mustererkennungsroutine ein charakteristisches Signalmuster extrahiert werden. Die Betriebssignalverläufe B1, B2, ... können dann jeweils in Form ihres charakteristischen Signalmusters dargestellt, gespeichert, verglichen und verarbeitet werden. Die charakteristischen Signalmuster können beispielweise durch charakteristische Amplituden, Amplitudenverläufe, Schwankungen, Korrelationen oder Frequenzen spezifiziert und dargestellt werden. Zum Vergleich zweier solcher Signalmuster sowie zur Bestimmung einer Abweichung zwischen diesen Signalmustern kann analog zum vorstehenden Fall beispielsweise ein Euklidischer Abstand zwischen darstellenden Vektoren dieser Signalmuster ermittelt werden.

Die Mustererkennung wird vorzugsweise im Selektionsmodul SEL durchgeführt. In diesem Fall kann ein jeweiliger Betriebssignalverlauf B1 bzw. B2, ... in Form seines charakteristischen Signalmusters in Zuordnung zum korrespondierenden Qualitätsparameter Q1 bzw. Q2, ... vom Selektionsmodul SEL zum Abweichungsdetektor DD übermittelt und dort in dieser Form verarbeitet werden.

Alternativ oder zusätzlich können die Betriebssignalverläufe B1, B2, ... durch eine Clustering-Routine einer Clusteranalyse unterzogen werden, wobei die erfassten Betriebssignalverläufe in Cluster zueinander ähnlicher Betriebssignalverläufe eingeteilt werden. Die Betriebssignalverläufe B1, B2, ... können dann jeweils in Form einer eindeutigen Clusterkennung dargestellt, gespeichert, verglichen und verarbeitet werden. In diesem Fall kann zum Vergleich zweier Betriebssignalverläufe geprüft werden, ob die zu vergleichenden Betriebssignalverläufe im selben Cluster liegen oder nicht, d.h. ob ihre Clusterkennungen übereinstimmen oder nicht. Falls beide Betriebssignalverläufe nicht im selben Cluster liegen, wird eine Abweichung detektiert, andernfalls nicht.

Die Clusteranalyse wird vorzugsweise im Selektionsmodul SEL durchgeführt, z.B. mittels eines sogenannten k-means-Verfahrens oder eines sogenannten DBSCAN-Verfahrens. Damit kann ein jeweiliger Betriebssignalverlauf B1 bzw. B2, ... in Form seiner Clusterkennung in Zuordnung zum korrespondierenden Qualitätsparameter Q1 bzw. Q2, ... vom Selektionsmodul SEL zum Abweichungsdetektor DD übermittelt und dort in dieser Form verarbeitet werden.

Der Abweichungsdetektor DD vergleicht fortlaufend die übermittelten Betriebssignalverläufe B1, B2, ... jeweils mit einem oder mehreren Sollverläufen SV, um Abweichungen von einem Sollverhalten der Produktionsmaschine PM festzustellen. Der mindestens eine Sollverlauf SV wird dabei vom Abweichungsdetektor DD aus einer Überwachungsdatenbank DB der Überwachungseinrichtung MON eingelesen. Je nachdem die Betriebssignalverläufe B1, B2, ... durch Zeitreihen, Signalmuster oder Clusterkennungen dargestellt werden, kann der mindestens eine Sollverlauf SV in korrespondierender Weise durch eine Zeitreihe, durch ein charakteristisches Signalmuster bzw. durch eine Clusterkennung dargestellt und in dieser Form mit dem betreffenden Betriebssignalverlauf B1 bzw. B2, ... wie oben beschrieben verglichen werden. Aus Gründen der Übersichtlichkeit wird im Folgenden nur ein Vergleich mit einem einzigen Sollverlauf SV explizit dargestellt.

Der Abweichungsdetektor DD detektiert genau dann eine Abweichung zwischen einem jeweiligen Betriebssignalverlauf B1 bzw. B2, ... und dem damit verglichenen Sollverlauf SV, falls ein Euklidischer Abstand zwischen den darstellenden Vektoren der verglichenen Verläufe einen vorgegebenen Schwellwert übersteigt bzw. falls die verglichenen Verläufe in unterschiedlichen Clustern liegen.

Darüber hinaus prüft der Abweichungsdetektor DD auch fortlaufend, ob die übermittelten Qualitätsparameter Q1, Q2, ... ein vorgegebenes Qualitätskriterium QC verfehlen, z.B. eine geforderte Geometrie, Festigkeit, Stabilität, Transparenz, Leitfähigkeit und/oder Oberflächenglätte des jeweiligen Werkstücks W1 bzw. W2,.... Auch das Qualitätskriterium QC wird vom Abweichungsdetektor DD aus der Überwachungsdatenbank DB eingelesen.

Falls für einen jeweiligen Betriebssignalverlauf B1 bzw. B2, ... eine Abweichung vom Sollverlauf SV detektiert wird, oder falls ein jeweiliger Qualitätsparameter Q1 bzw. Q2, ... das vorgegebene Qualitätskriterium QC verfehlt, wird durch den Abweichungsdetektor DD ein Triggersignal generiert und zu einer Abfrageeinrichtung IR der Überwachungseinrichtung MON übermittelt.

Für das vorliegende Ausführungsbeispiel sei angenommen, dass nur bei den Betriebssignalverläufen B1 und B2 eine Abweichung vom Sollverlauf SV detektiert wird und nur der Qualitätsparameter Q1 das Qualitätskriterium QC verfehlt. Infolgedessen wird für das Paar (B1, Q1) ein Triggersignal TR1 und für das Paar (B2, Q2) ein Triggersignal TR2 generiert und in die Abfrageeinrichtung IR eingespeist. Das Triggersignal TR1 umfasst dabei den Betriebssignalverlauf B1 und den Qualitätsparameter Q1 und das Triggersignal TR2 den Betriebssignalverlauf B2 und den Qualitätsparameter Q2.

Durch das Triggersignal TR1 wird die Abfrageeinrichtung IR dazu veranlasst, zu prüfen, ob dem im Triggersignal TR1 enthaltenen Betriebssignalverlauf B1 und dem im Triggersignal TR1 enthaltenen Qualitätsparameter Q1 in der Überwachungsdatenbank DB jeweils eine oder mehrere Fehlerursachen zugeordnet sind. Entsprechend wird die Abfrageeinrichtung IR durch das Triggersignal TR2 dazu veranlasst, zu prüfen, ob dem im Triggersignal TR2 enthaltenen Betriebssignalverlauf B2 in der Überwachungsdatenbank DB eine oder mehrere Fehlerursachen zugeordnet sind.

In der Überwachungsdatenbank DB sind erfasste Betriebssignalverläufe, Qualitätsparameter sowie ggf. Fehlerursachen als Knoten in einem Wissensgraphen KG gespeichert und organisiert. Dabei sind einem jeweiligen Betriebssignalverlauf ggf. ein oder mehrere bei diesem Betriebssignalverlauf erfasste Qualitätsparameter sowie ggf. eine oder mehrere einen solchen Betriebssignalverlauf hervorrufende Fehlerursachen zugeordnet. Entsprechend können einem erfassten Qualitätsparameter ggf. eine oder mehrere einen solchen Qualitätsparameter hervorrufende Fehlerursachen sowie ggf. weitere resultierende Qualitätsparameter zugeordnet sein. Die obigen Zuordnungen sind als Kanten im Wissensgraphen hinterlegt.

Wie oben bereits angedeutet, können die Betriebssignalverläufe im Wissensgraphen KG jeweils in Form einer Zeitreihe, eines charakteristischen Signalmusters oder einer Clusterkennung hinterlegt sein. Qualitätsparameter und Fehlerursachen können jeweils durch einen oder mehrere numerische Werte und/oder semantisch spezifiziert werden. Auf diese Weise können einem Betriebssignalverlauf beispielsweise semantisch spezifizierte Qualitätsparameter wie "Abnormal milling depth", "Excessive vibration during milling operation" oder "Inconsistent milling speed" oder semantisch spezifizierte Fehlerursachen wie "Worn-out milling tool", "Incorrect milling tool alignment" oder "Insufficient lubrication" im Wissengraphen KG zugeordnet sein.

Um zu prüfen, ob dem Betriebssignalverlauf B1 bzw. B2 eine oder mehrere Fehlerursachen im Wissensgraphen KG zugeordnet sind, wird der Betriebssignalverlauf B1 bzw. B2 von der Abfrageeinrichtung IR zur Überwachungsdatenbank DB übermittelt. Dort wird geprüft, ob der Betriebssignalverlauf B1 bzw. B2 oder ein dazu ähnlicher Betriebssignalverlauf im Wissensgraphen KG gespeichert ist.

Zu diesem Zweck wird ein Ähnlichkeitsvergleich zwischen dem Betriebssignalverlauf B1 bzw. B2 und einem oder mehreren im Wissensgraphen KG gespeicherten Betriebssignalverläufen ausgeführt. Je nachdem die zu vergleichenden Betriebssignalverläufe durch Zeitreihen, Signalmuster oder Clusterkennungen dargestellt werden, wird dabei geprüft, ob beispielsweise ein Euklidischer Abstand zwischen darstellenden Vektoren der zu vergleichenden Zeitreihen oder Signalmuster einen vorgegebenen Schwellwert übersteigt, bzw. ob die zu vergleichenden Verläufe in verschiedenen Clustern liegen.

Falls im Wissensgraphen KG ein Betriebssignalverlauf gefunden wird, bei dem der Schwellwert nicht überschritten wird, bzw. der im selben Cluster liegt wie der Betriebssignalverlauf B1 bzw. B2, gilt der Betriebssignalverlauf B1 bzw. B2 als im Wissensgraphen KG enthalten. In diesem Fall wird weiter geprüft, ob dem gefundenen Betriebssignalverlauf (in Figur 2 ebenfalls mit dem Bezugszeichen B1 bzw. B2 bezeichnet) eine oder mehrere Fehlerursachen im Wissensgraphen KG zugeordnet sind. Falls mindestens eine Fehlerursache zugeordnet ist, wird diese mindestens eine Fehlerursache von der Überwachungsdatenbank DB zur Abfrageeinrichtung IR übermittelt.

Für das vorliegende Ausführungsbeispiel sei angenommen, dass der Betriebssignalverlauf B1 zwar im Wissensgraphen KG hinterlegt ist, ihm aber keine Fehlerursache zugeordnet ist. Infolgedessen wird eine Leermeldung ø von der Überwachungsdatenbank DB zur Abfrageeinrichtung IR übermittelt, die der Abfrageeinrichtung IR signalisiert, dass dem Betriebssignalverlauf B1 keine Fehlerursache zugeordnet ist.

Weiter sei angenommen, dass dem ebenfalls im Wissensgraphen KG hinterlegten Betriebssignalverlauf B2 dort eine Fehlerursache F2 zugeordnet ist. Infolgedessen wird die Fehlerursache F2 von der Überwachungsdatenbank DB zur Abfrageeinrichtung IR übermittelt.

Durch die auf den Betriebssignalverlauf B1 bezogene Leermeldung ø wird die Abfrageeinrichtung IR dazu veranlasst, eine Aufforderung REQ zur Eingabe einer Fehlerursache durch eine Benutzerschnittstelle IO der Abfrageeinrichtung IR an eine Bedienperson USR der Produktionsmaschine PM auszugegeben. Die Aufforderung REQ enthält insbesondere eine Information über den korrespondierenden Qualitätsparameter Q1, vorzugsweise den Qualitätsparameter Q1 selbst sowie eine Information über den korrespondierenden Betriebssignalverlauf B1, vorzugsweise den Betriebssignalverlauf B1 selbst.

Die Angaben über den vom Sollverlauf SV abweichenden Betriebssignalverlauf B1 und den das Qualitätskriterium QC verfehlenden Qualitätsparameter Q1 erlauben es der Bedienperson USR in vielen Fällen, eine Ursache für die Abweichung vom Sollverlauf SV und/oder für das Verfehlen des Qualitätskriteriums QC zu finden. Die gefundene Ursache wird dann von der Bedienperson USR über die Benutzerschnittstelle IO als Fehlerursache F1 eingegeben.

Die eingegebene Fehlerursache F1 wird durch die Abfrageeinrichtung IR in die Überwachungsdatenbank DB eingespeist und im Wissensgraphen KG dem korrespondierenden Betriebssignalverlauf B1 sowie dem korrespondierenden Qualitätsparameter Q1 zugeordnet.

Gegebenenfalls können für den Betriebssignalverlauf B1 und den Qualitätsparameter Q1 auch mehrere Fehlerursachen von der Bedienperson USR oder von mehreren Bedienpersonen eingelesen und dem korrespondierenden Betriebssignalverlauf B1 sowie dem korrespondierenden Qualitätsparameter Q1 im Wissensgraphen KG zugeordnet werden.

Wie oben schon erwähnt, ist dem Betriebssignalverlauf B2 im Unterschied zum Betriebssignalverlauf B1 bereits eine Fehlerursache F2 im Wissensgraphen KG zugeordnet. Durch die Übermittlung der auf den Betriebssignalverlauf B2 bezogenen Fehlerursache F2 wird die Abfrageeinrichtung IR dazu veranlasst, die Fehlerursache F2 über die Benutzerschnittstelle IO an die Bedienperson USR auszugeben und/oder die Produktionsmaschine PM abhängig von der Fehlerursache F2 anzusteuern.

Durch die Ausgabe der Fehlerursache F2 wird die Bedienperson USR darüber informiert, wodurch die Abweichung des Betriebssignalverlaufs B2 vom Sollverlauf SV möglicherweise verursacht wird. Dies erlaubt es der Bedienperson in vielen Fällen, frühzeitig geeignete, ursachenspezifische Gegenmaßnahmen zu veranlassen.

Vorteilhafterweise kann die Bedienperson USR über die Benutzerschnittstelle IO auch dazu aufgefordert werden, die ausgegebene Fehlerursache F2 zu bestätigen oder zu berichtigen oder eine oder mehrere weitere Fehlerursachen einzugeben. Eine berichtigte oder weitere Fehlerursache kann dann wie oben beschrieben, dem korrespondierenden Betriebssignalverlauf im Wissensgraphen KG zugeordnet werden.

Falls einem Betriebssignalverlauf im Wissensgraphen KG mehrere Fehlerursachen zugeordnet sind, können diese in Form eines Auswahlmenüs über die Benutzerschnittstelle IO ausgegeben werden. Die ursprünglich zugeordneten Fehlerursachen können dann im Wissensgraphen KG durch eine oder mehrere auf diese Weise ausgewählte Fehlerursachen ersetzt werden.

Falls die Produktionsmaschine PM über eigene Diagnosefähigkeiten verfügt, können ggf. auch eine oder mehrere von der Produktionsmaschine PM stammende Fehlerursachen zusätzlich über die Benutzerschnittstelle IO ausgegeben werden.

Darüber hinaus kann die Abfrageeinrichtung IR über ein vortrainiertes großes Sprachmodell LLM, wie beispielsweise GPT-4, GPT-3, BLOOM, LLaMA, T5-11B, PaLM-E, Gemini Pro oder Mixtral 8x7b verfügen. Das große Sprachmodell LLM ist darauf vortrainiert, anhand von Eingabetexten darauf bezogene Antworttexte zu generieren. Im vorliegenden Ausführungsbeispiel werden dem großen Sprachmodell LLM im Wissensgraphen KG gespeicherte Betriebssignalverläufe, Qualitätsparameter, Fehlerursachen sowie deren gegenseitige Zuordnungen in Textform, vorzugsweise im Rahmen eines Finetunings oder einer anderen Form des Nachtrainings zugeführt. Mittels des großen Sprachmodells LLM können Benutzeranfragen, insbesondere zu Betriebssignalverläufen, Qualitätsparametern und Fehlerursachen in natürlicher Sprache durch Antworttexte beantwortet werden.

So kann eine in natürlicher Sprache formulierte Benutzeranfrage durch die Benutzerschnittstelle IO eingelesen und in Form eines Eingabetextes in das große Sprachmodell LLM eingespeist werden. Letzteres generiert daraus einen Antworttext in natürlicher Sprache, der dann durch die Benutzerschnittstelle IO ausgegeben wird. Auf diese Weise kann die Bedienperson USR über die Benutzerschnittstelle IO in natürlicher Sprache kommunizieren. Erfahrungsgemäß können einem jeweiligen Antworttext in vielen Fällen zusätzliche nützliche Angaben entnommen werden, insofern große Sprachmodelle häufig gute Inferenz- und Abstraktionsfähigkeiten aufweisen.

Wie oben schon angedeutet, kann die Fehlerursache F2 alternativ oder zusätzlich auch dazu verwendet werden, die Produktionsmaschine PM anzusteuern, um so geeignete, fehlerursachenspezifische Gegenmaßnahmen automatisch einzuleiten. Zu diesem Zweck wird die Fehlerursache F2 von der Abfrageeinrichtung IR zu einer Steuereinrichtung CLT der Überwachungseinrichtung MON übermittelt. Die Steuereinrichtung CTL dient zum Ansteuern der Produktionsmaschine PM. Hierzu leitet die Steuereinrichtung CTL aus der Fehlerursache F2 ein geeignetes Steuersignal CS ab und übermittelt dieses zur Produktionsmaschine PM, um diese entsprechend anzusteuern.

Auf diese Weise kann die Produktionsmaschine PM durch die Steuereinrichtung CTL insbesondere dazu veranlasst werden, in fehlerursachenspezifischer Weise ein Alarmsignal auszugeben, einen Sicherheitszustand einzunehmen, Bedienhinweise auszugeben und/oder eine Bearbeitung zumindest des aktuellen Werkstücks anzuhalten oder zu verlangsamen.

## Patentansprüche

1. Computerimplementiertes Verfahren zum Überwachen einer Produktionsmaschine (PM), wobei in deren laufendem Betrieb
a) fortlaufend ein aktuelles Betriebssignal (BS) der Produktionsmaschine (PM) erfasst wird,
b) für eine Vielzahl von Werkstücken (W1, W2, ...) jeweils ein Zeitfenster (T1, T2, ...) erfasst wird, in dem das jeweilige Werkstück durch die Produktionsmaschine (PM) bearbeitet wird,
c) für jedes Zeitfenster (T1, T2, ...) ein auf das jeweilige Zeitfenster begrenzter Verlauf des Betriebssignals (B1, B2, ...) erfasst wird,
d) ein jeweiliger Qualitätsparameter (Q1, Q2, ...) des jeweils bearbeiteten Werkstücks (W1, W2, ...) erfasst wird,
e) infolge einer Detektion einer Abweichung eines jeweiligen Betriebssignalverlaufs von einem Sollverlauf (SV) geprüft wird, ob dem jeweiligen Betriebssignalverlauf (B1, B2) in einer Überwachungsdatenbank (DB) eine Fehlerursache (F1, F2) zugeordnet ist, und
falls dies nicht zutrifft,
- eine Information über den jeweiligen Qualitätsparameter (Q1) mit einer Aufforderung (REQ) zur Eingabe einer jeweiligen Fehlerursache durch eine Benutzerschnittstelle (IO) ausgegeben wird,
- die jeweilige Fehlerursache (F1) durch die Benutzerschnittstelle (IO) eingelesen wird, und
- der jeweilige Betriebssignalverlauf (B1), der jeweilige Qualitätsparameter (Q1) sowie die jeweils eingelesene Fehlerursache (F1) einander zugeordnet in der Überwachungsdatenbank (DB) gespeichert werden, und
andernfalls
- die zugeordnete Fehlerursache (F2) ausgegeben wird und/oder die Produktionsmaschine (PM) abhängig von der zugeordneten Fehlerursache (F2) angesteuert wird.

2. Verfahren nach Anspruch 1, **dadurch gekennzeichnet,**
**dass** der jeweilige Betriebssignalverlauf (B1), der jeweilige Qualitätsparameter (Q1) sowie die jeweils eingelesene Fehlerursache (F1) einander zugeordnet in einem Wissensgraphen (KG) gespeichert werden.

3. Verfahren nach einem der vorhergehenden Ansprüche, **dadurch gekennzeichnet,**
**dass** eine Mustererkennungsroutine aus den erfassten Betriebssignalverläufen (B1, B2, ...) jeweils ein charakteristisches Signalmuster extrahiert,
**dass** zur Detektion der Abweichung vom Sollverlauf (SV) das jeweils extrahierte Signalmuster mit einem durch die Mustererkennungsroutine aus dem Sollverlauf (SV) extrahierten Soll-Signalmuster verglichen wird, und
**dass** der jeweilige Betriebssignalverlauf (B1, B2, ...) in Form des jeweils extrahierten Signalmusters in der Überwachungsdatenbank (DB) gespeichert wird.

4. Verfahren nach einem der vorhergehenden Ansprüche, **dadurch gekennzeichnet,**
**dass** die erfassten Betriebssignalverläufe (B1, B2, ...) durch eine Clustering-Routine einer Clusteranalyse unterzogen werden, wobei die erfassten Betriebssignalverläufe (B1, B2, ...) in Cluster zueinander ähnlicher Betriebssignalverläufe eingeteilt werden,
**dass** zur Detektion der Abweichung vom Sollverlauf (SV) geprüft wird, ob der jeweilige Betriebssignalverlauf (B1, B2, ...) im selben Cluster liegt wie der Sollverlauf (SV), und
**dass** der jeweilige Betriebssignalverlauf (B1, B2, ...) in Form einer Kennung des zugehörigen Clusters in der Überwachungsdatenbank (DB) gespeichert wird.

5. Verfahren nach einem der vorhergehenden Ansprüche, **dadurch gekennzeichnet,**
**dass** falls der jeweilige Qualitätsparameter (Q1, Q2, ...) ein vorgegebenes Qualitätskriterium (QC) verfehlt, geprüft wird, ob dem jeweiligen Qualitätsparameter in der Überwachungsdatenbank (DB) eine Fehlerursache zugeordnet ist, und
**dass** falls dies nicht zutrifft, die Information über den jeweiligen Qualitätsparameter mit der Aufforderung (REQ) zur Eingabe der jeweiligen Fehlerursache durch die Benutzerschnittstelle (IO) ausgegeben wird.

6. Verfahren nach einem der vorhergehenden Ansprüche, **dadurch gekennzeichnet,**
**dass** der Sollverlauf (SV) aus früheren Betriebssignalverläufen abgeleitet wird, bei denen der betreffende Qualitätsparameter ein vorgegebenes Qualitätskriterium (QC) erfüllt hat.

7. Verfahren nach einem der vorhergehenden Ansprüche, **dadurch gekennzeichnet,**
**dass** der jeweilige Qualitätsparameter (Q1, Q2, ...) mittels eines optischen Sensors, mittels einer Kamera und/oder mittels eines Sensors (S) zur Messung einer geometrischen Eigenschaft, einer elektrischen Eigenschaft, einer mechanischen Eigenschaft, einer optischen Eigenschaft oder einer Materialeigenschaft oder zur Messung einer Oberflächenrauheit ermittelt wird.

8. Verfahren nach einem der vorhergehenden Ansprüche, **dadurch gekennzeichnet,**
**dass** mit der Information über den jeweiligen Qualitätsparameter auch eine Information über den jeweiligen Betriebssignalverlauf durch die Benutzerschnittstelle (IO) ausgegeben wird.

9. Verfahren nach einem der vorhergehenden Ansprüche, **dadurch gekennzeichnet,**
**dass** geprüft wird, ob dem jeweiligen Betriebssignalverlauf in der Überwachungsdatenbank (DB) ein Qualitätsparameter zugeordnet ist, und
**dass** falls dies zutrifft, der zugeordnete Qualitätsparameter ausgegeben wird und/oder die Produktionsmaschine (PM) abhängig vom zugeordneten Qualitätsparameter angesteuert wird.

10. Verfahren nach einem der vorhergehenden Ansprüche, **dadurch gekennzeichnet,**
**dass** ein großes Sprachmodell (LLM) bereitgestellt wird, das darauf vortrainiert ist, anhand von Eingabetexten darauf bezogene Antworttexte zu generieren,
**dass** die gespeicherten Betriebssignalverläufe, Qualitätsparameter, Fehlerursachen sowie deren gegenseitige Zuordnungen dem großen Sprachmodell (LLM) in Textform zugeführt werden,
**dass** durch die Benutzerschnittstelle (IO) eine Benutzeranfrage eingelesen und in Form eines Eingabetextes in das große Sprachmodell (LLM) eingespeist wird, das daraus einen Antworttext generiert, und
**dass** der Antworttext durch die Benutzerschnittstelle (IO) ausgegeben wird.

11. Verfahren nach einem der vorhergehenden Ansprüche, **dadurch gekennzeichnet,**
**dass** falls dem jeweiligen Betriebssignalverlauf in der Überwachungsdatenbank (DB) mehrere Fehlerursachen zugeordnet sind, diese Fehlerursachen durch die Benutzerschnittstelle (IO) zur Auswahl einer zutreffenden Fehlerursache ausgegeben werden.

12. Verfahren nach einem der vorhergehenden Ansprüche, **dadurch gekennzeichnet,**
**dass** Betriebssignalverläufe und/oder Qualitätsparameter mehrerer Produktionsmaschinen erfasst und produktionsmaschinenübergreifend in der Überwachungsdatenbank (DB) gespeichert werden, und
**dass** einem bei einer ersten Produktionsmaschine erfassten Betriebssignalverlauf und/oder Qualitätsparameter eine Fehlerursache bei einer von der ersten Produktionsmaschine verschiedenen, zweiten Produktionsmaschine in der Überwachungsdatenbank zugeordnet wird.

13. Überwachungseinrichtung (MON) zum Überwachen einer Produktionsmaschine (PM), eingerichtet zum Ausführen der Verfahrensschritte eines Verfahrens nach einem der vorhergehenden Ansprüche.

14. Computerprogrammprodukt umfassend Befehle, die bei der Ausführung des Programms durch einen Computer eine Überwachungseinrichtung (MON) nach Anspruch 13 dazu veranlassen, ein Verfahren nach einem der Ansprüche 1 bis 12 auszuführen.

15. Computerlesbares Speichermedium mit einem Computerprogrammprodukt nach Anspruch 14.
